# EUROPEAN PATENT SPECIFICATION

(11) **EP 3 447 604 B1**
(45) Date of publication and mention of the grant of the patent: **09.12.2020**
(21) Application number: 17187690.7
(22) Date of filing: 24.08.2017
(51) Int. Cl.: G06F 1/16, H01R 13/717

(54) **DEVICE WITH SENSOR BASED PORT INDICATION**
GERÄT MIT SENSORBASIERTER PORTANZEIGE
DISPOSITIF AVEC INDICATION DE PORT À BASE DE CAPTEUR

(43) Date of publication of application: 27.02.2019
(73) Proprietor: Vestel Elektronik Sanayi ve Ticaret A.S., 45030 Manisa (TR)
(72) Inventor: DERELI, Ulas, 45030 Manisa (TR); ER, Alper Sait, 45030 Manisa (TR)
(74) Representative: Kehl, Ascherl, Liebhoff & Ettmayr Patentanwälte Partnerschaft mbB

(56) References cited:
- US-A1- 2007 080 818
- US-A1- 2008 309 511
- US-A1- 2011 038 114
- US-A1- 2013 249 701

## Description

The present invention refers according to claim 1 to a device, in particular a laptop, that provides improved user comfort and a method according to claim 6 for identifying the position of mechanical ports of a device having a keyboard and/or a screen unit.

### Background of the invention

Nowadays, almost everybody uses laptops frequently for business or entertainment purposes. There are many I / O units in the laptops. With these I / O units, laptops can perform many operations such as image transfer, file transfer and audio transfer.

Thanks to the advancing technology, the number of I / Os in the lap-tops is increasing. Designers are constantly innovating to meet the needs of users. These I / O ports are located on the sides of the laptop. The I / O's can be randomly grouped into groups within themselves. Positioning the I / O ports on the sides of the laptops leads to a problem. When the user wants to use the I / O ports, it is difficult to see these ports. For example, if a person who has not used a particular laptop before, when he/she want to connect the laptop to the computer via HDMI cable, he/she can not see HDMI port easily because of its location. He/she has to lift the laptop or lean to the side to see the I/O port.

Document US20170075387 A1 discloses an optical projection computer. The optical projection computer mainly includes a micro-projection module for displaying the content of the computer; a Mini PC module for integrating the relevant functions of the computer; an optical projection keyboard/mouse module for generating an optical keyboard zone or an optical mouse zone; the optical projection keyboard/mouse module, Mini PC module and micro-projection module are connected successively. With the design scheme set forth, the optical projection computer will have the features of low weight, small size and favorable portability. Document US2011/038114A1 discloses systems, devices and methods for operating a housing for an electronic device as an input/output (I/O) device. In one embodiment, an electronic device includes a housing configured to function as an integrated housing and I/O device and one or more sensors obscured by a panel of the housing. The one or more sensors being configured to sense via the panel of the housing. The electronic device further includes a processing unit communicatively coupled to the one or more sensors and configured to interpret electrical signals generated by the one or more sensors. One or more output devices are communicatively coupled to the processing unit and configured to provide an output in response to the one or more sensors generating an electrical signal.

Document US2008/309511A1 discloses systems and methods for providing selectively adjustable icons to assist users of an electronic device. Icons can be selectively adjusted to assist users in connecting and disconnecting accessories to and from the electronic device.

Document US2013/249701A1 relates to a method for sensing a connection port and a connection port sensing apparatus thereof. The method includes the steps of: providing a sensing device nearing a connection port; providing a lighting device nearing the connection port; lighting the lighting device when the sensing device detects that an object is nearing the connection port, concurrently, displaying a message through the operating system to notify the user of the corresponding information about the connection port.

Document US2007/080818A1 discloses an electronic device including a plurality of connection terminals and a control method thereof. The electronic device including a plurality of connection terminals, including: a light-emitting unit disposed adjacent to the plurality of connection terminals; a sensing unit sensing whether an external connection terminal is within a predetermined sensing range with respect to the connection terminal; and a control unit controlling the light-emitting unit to emit light when it is determined that the predetermined external connection terminal is within the predetermined sensing range according to the sensed result of the sensing unit. With this configuration, the connection convenience is provided by guiding an external connection terminal to the corresponding connection terminal of the electronic device under a low luminance condition, and a control method thereof.

### Object of the invention

It is the object of the invention to provide a device and method that simplifies usage of external devices.

### Description of the invention

The before mentioned object is solved by a device according to claim 1. The device respectively computer device or smart device or data processing device, in particular laptop or tablet PC, of the present invention preferably comprises at least a housing, a screen unit respectively display for outputting visual information and/or a keyboard, at least one port for mechanically coupling with an external device for inputting and/or outputting of data and/or signals, at least one detection means for detecting the presence of a human body part in a defined area in front of the port, wherein the keyboard and/or screen unit and detection means and the port are coupled to said housing, wherein the detection means is connected to an illumination means, in particular via a processor unit, for visually indicating the position of the port and for identifying the port, wherein the illumination means is actuated in dependency of the presence of the human body part. The illumination means projects light for identifying the position of the respective port into the periphery of the device, in particular onto a surface of a support which is holding the device.

This solution is beneficial since the device automatically provides an indication where a port is located. Thus, the device respectively laptop according to the present solution is able to detect the wish of a user to use the I / O ports. In this case, it is easier to use the port since the device highlights the location/s of the I / O port/s to the user.

Further prefered embodiments are subject-matter of the following specification parts and/or of the dependent claims.

According to a preferred embodiment of the present invention the illumination means comprises at least one illuminating element, wherein the illuminating element illuminates at least a predefined symbol. This embodiment is beneficial since the illumination means carries out multiple, in particular two, functions, in particular indicating the position and indicating the type of port.

Multiple ports are coupled according to the method embodiment of the present invention to the housing, wherein the illumination means illuminates multiple predefined symbols at the same time, wherein each symbol is associated with one port. This is beneficial since devices like laptops often have multiple ports of different types. Thus, indicating the position and type of multiple ports, in particular of each port, helps the user to find the desired port.

The illumination means comprises according to another embodiment of the present invention a light projection means, wherein the light projection means is arranged besides one port or above one port or below one port, wherein the light projection means emits light to a position besides the housing. Thus, the light projection means emits according to embodiments of the present invention light with respect to the position of multiple ports or multiple projection means are provided for emitting light to positions in front of respective ports, wherein each projection means projects the light to a position besides the housing. This is beneficial since the overall appearance of the device is increased respectively the periphery, in particularly the surface of a support, of the device is transformed into an information representing means.

The illimination means illuminates according to a further preferred embodiment of the present invention sections of the housing, wherein each section overlays the respective port respectively is arranged in close vicinity, in particular in a distance of less than 20mm or less than 15mm or less than 10mm or less than 5mm. This embodiment is beneficial since only elements which are belonging to the housing or which are attached to the housing are illuminated, thus the device can be positioned on a lap. That means no support surface, which is illuminated, is required.

The housing comprises according to a further embodiment of the present invention a transparent section at least above multiple ports, where the transparent section forms a shape of the symbol identifying the respective port. This embodiment is beneficial since the illumination means can be very cheap. According to an embodiment a screen section, in particular a LED section or an OLED section, in particular a touch screen may be included. This embodiment is beneficial since the screen section can be used to display additional information, in particularly the amount of data and/or energy and/or signals transferred though one port while an external device is connected to the respective port.

An illumination parameter, in particular light color and/or brightness, varies according to a further preferred embodiment of the present invention in dependency of a distance of the human body part to the respective port. This embodiment is beneficial since the user can be guided to one port, e.g. by changing the light color from red to green and/or by increasing the brightness. In case multiple ports are present it is possible to fade the brightness of the light in such a manner that the position of the closest port is highlighted and/or the type of the closest port is displayed.

The port forms according to a further embodiment an opening, wherein the opening extends in a plane which is inclined in an angle α to the actuation interface, in particular keys, of the keyboard and/or which is inclined to the screen main surface of the screen unit. The port/s is/are arranged at one or multiple sides of the device, in particular at the left side and/or right side, and/or backside. Angle α is an angle between 45° and 135°, in particular 90°.

The above mentioned object is also solved by a method according to claim 6 for identifying the positions of mechanical ports of a device having a keyboard and/or a screen unit, wherein the mechanical ports are ports for inputting of data and/or signals and/or energy and/or for outputting of data and/or signals and/or energy, at least comprising the steps: Detecting a body part, in particular a hand, in a predefined area in front of the ports with a detection means, wherein the detection means is part of the device, triggering an illumination means for visually indicating the positions of the ports and preferably for identifying the ports, wherein the illumination means is actuated in dependency of detection of the presence of the human body part.

In the method according to the present invention the illumination means illuminates multiple predefined symbols at the same time or generates multiple predefined symbols, wherein each symbol is associated with one respective port.

The illumination means projects light according to the method of the present invention for identifying the positions of the respective ports into the periphery of the device, in particular onto a surface of a support which is holding the device.

At least one illumination parameter varies, in particular fades, according to a further preferred embodiment of the present invention in dependency of a distance of the human body part to the respective port.

The illumination parameter defines according to a further preferred embodiment of the present invention the color of the projected light and/or the brightness of the projected light and/or the direction of the projected light.

Thus, the distance sensor respectively detection means will be used to detect that the user wants to use I / O. The distance sensor will be positioned on the side of the laptop where the I / O is located. When the user takes his hand to the side to use a port, it will be detected by the distance sensor. Then the distance sensor will transmit this signal to the control unit respectively processing unit, like a processor. The control unit will operate the illumination means to project the serigraphy of the I/O's to the floor toshow the user of the laptop the I/O port's locations. To do this, the illumination means will comprise or consists of mini projectors which are positioned on the top of the ports. Preferably the name and symbol of each port will be projected on the floor respectively surface. On this side, the user will be able to see the location of the ports easily and use the ports without difficulty. it is hereby possible that illuminations means and detector means are arranged on multiple sides of the the device, in particular on the left side, right side and/or backside. In case a human body part is detected on one side the illumination means of the respective side indicates the ports of the respective side. However, it is also possible that all illumination means are activated in case a human body part is detected by the detection means, thus all indicatable ports are indicated. This solution is beneficial since the application area of the invention is devices like laptops which are frequently used in daily life and business life. The invention relates to the use of I / O ports which preferably allow data transferring, image and audio transferring or ethernet connection etc.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

Fig. 1 schematic illustration of a device according to the present invention;
Fig. 2 preferred steps of the method according to the present invention and
Fig. 3 example of usage of the present invention.

### Detailed Description of the Drawings

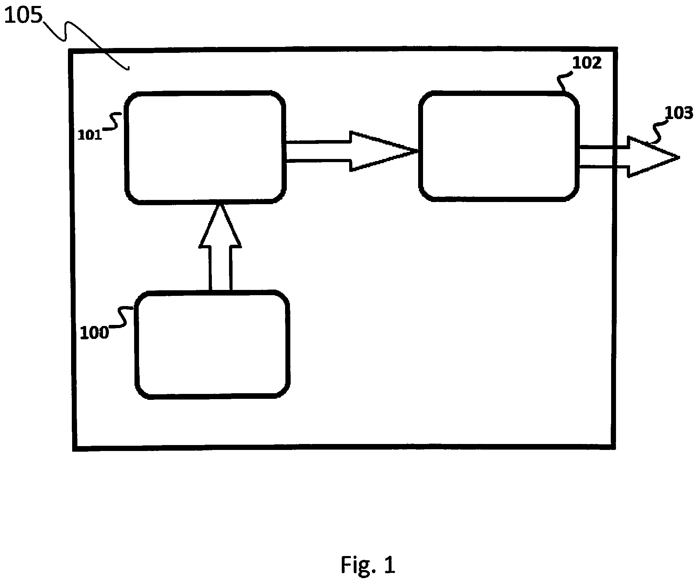

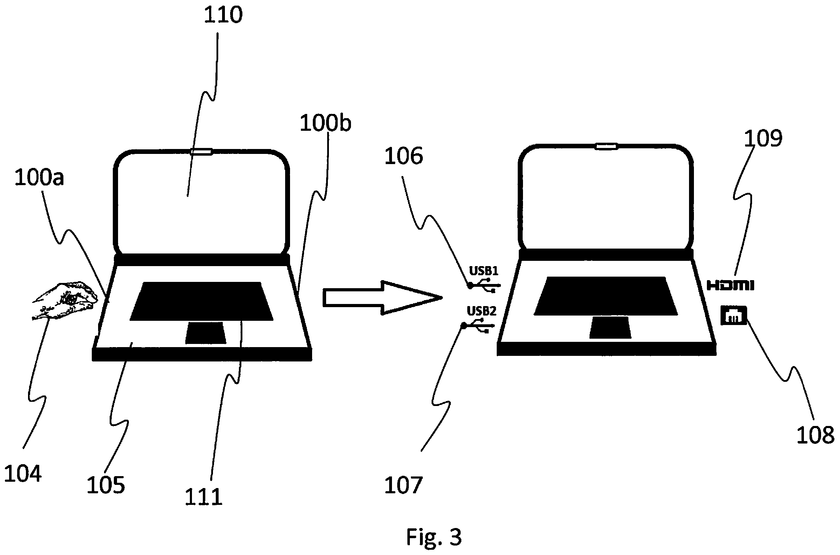

Fig. 1 schematically shows a device 105. Said device 105 comprises at least one detection means 100 (or as shown in Fig.3 two detection means 100a/100b). The detection means 100 detects a human body part in a predefined area around at least one I/O port, in particularly USB, HDMI, LAN, etc. port. A control unit respectively processing unit 101 reads data or signals provided by the detection means 100 and triggers in dependency of said data or signals an illumination means 102. The illumination means 102 preferably comprises mini projectors, wherein the illuminating means 102 illuminates an area around the device 105, in particularly a surface of a support, e.g. a table. The illumination is preferably shaped in such a manner that an identification of the respective port takes place. The Illumination is preferably caused in front of such a port to simplify finding the respective port.

Thus, when the user wants to use the I / O ports on the laptop, the hand 104 of user will approach the part where the I / O is located. A distance sensor respectively detection means 100 positioned on the side of the laptop 105 will recognize the hand 104 of the user. When the sensor detects the user's hand 104, it will be understood that I / O ports are wanted to be used and a signal will be given to the control unit 101. After the information arriving at the control unit 101, preferably the symbols and/or names of the I / O ports will be reflected respectively projected to the floor where the laptop 105 is located, in particularly with the mini projectors 102 positioned near each of the I / O ports. to allow the user to see the desired port. Thus, the user will be able to easily see 103 the port name and/or position he/she wants to use.

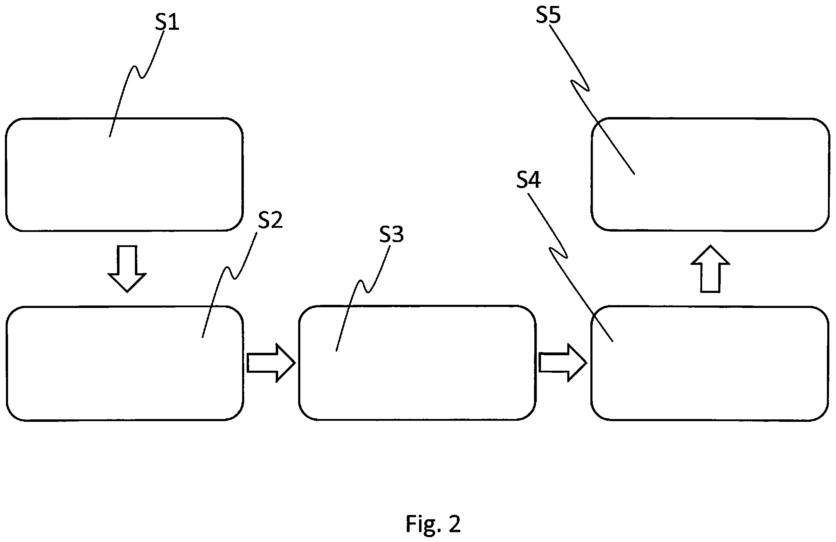

Fig. 2 exemplarily describes the steps of the inventive method. The method according to the present invention preferably comprises the steps of bringing the users hand 104 closer to the port S1, detecting the users hand 104 by the detection means 100 (step S2), transmission of the information from detection means 100, in particularly distance sensor, to the control unit / processing unit 101 (step S3), projection of serigraphy on the floor due to one or multiple illuminating means (102), in particularly mini projectors, arranged in the housing S4 and user finds I/O ports more easily S5.

Fig. 3 shows on the left side the detection of a human body part 104, in particular and, by a detection means 100a, wherein all detections means 100a, 100b are connected to the processing unit 101.

Fig. 3 further shows on the right side symbols illuminated in front of the respective ports as a result of the detection of the human body part in the predefined area around respectively in front of the detection means 100.

Thus, the present invention refers to a device 105, in particular laptop, wherein the device 105 comprises at least a housing, a screen unit 110 for outputting visual information and/or a keyboard 111, at least one port for mechanically coupling with an external device for inputting and/or outputting of data and/or signals and/or energy, at least one detection means 100 for detecting the presence of a human body part 104 in a defined area in front of the at least one port, wherein the detection means 100 and the at least one port are coupled to said housing, wherein the illumination means 102 is actuated in dependency of detection of the presence of the human body part and the illumination means projects light for identifying the position of the respective port into the periphery of the device.

### List of refence numbers

- 100: sensor /detection means
- 100a: detection means on one side (left)
- 100b: detection means on a further side (right)
- 101: control unit / processing unit
- 102: illumination means
- 103: illumination
- 104: human body part
- 105: device / laptop
- 106: first USB port
- 107: second USB port
- 108: LAN port
- 109: HDMI port
- 110: screen unit
- 111: keyboard unit
- S1: Bringing the users hand closer to the port
- S2: Detecting the users hand by the distance sensor
- S3: Transmission of the information from distance sensor to the control unit / processing unit
- S4: Projection of serigraphy on the floor due to one or multiple illuminating means, in particularly mini projectors, arranged in the housing
- S5: User can see and use I/O ports more easily

## Claims

1. Device (105), in particular a aptop,
at least comprising
a housing,
a screen unit (110) for outputting visual information and/or a keyboard (111),
at least one port for mechanically coupling with an external device for inputting and/or outputting of data and/or signals and/or energy,
at least one detection means (100) for detecting the presence of a human body part (104) in a defined area in front of the at least one port,
wherein the detection means (100) and the at least one port are coupled to said housing, illumination means (102) actuated in dependency of detection of the presence of the human body part,**characterized in that**
the illumination means (102) projects light for identifying the position of the respective port into the periphery of the device (105).

2. Device according to claim 1,
**characterized in that**
the housing comprises a transparent section at least above multiple ports, where the transparent section forms a shape of the symbol identifying the respective port .

3. Device according to any of the preceding claims, **characterized in that**
an illumination parameter, in particular light color and/or brightness, varies in dependency of a distance of the human body part to the respective port.

4. Device according to any of the preceding claims,
**characterized in that**
the at least one port forms an opening, wherein the opening extends in a plane which is inclined at an angle α to the actuation interface, in particular <eys, of the keyboard and/or which is inclined to the display main surface, in particular the screen section.

5. Device according to claim 4,
**characterized in that**
angle α is an angle between 45° and 135°, in particular 90°.

6. Method for identifying the positions of mechanical ports of a device (105) having a keyboard (111) and/or a screen unit (110), wherein the mechanical ports are ports for inputting of data and/or signals and/or energy and/or for outputting of data and/or signals and/or energy,
at least comprising the steps:
Detecting a human body part (104), in particular a hand, in a predefined area in front of the ports with a detection means (100),
wherein the detection means (100) is part of the device (105),
triggering an illumination means (102) for visually indicating the positions of the ports and preferably for identifying the ports, wherein the illumination means (102) is actuated in dependency of detection of the presence of the human body part (104), wherein the illumination means (102) illuminates multiple predefined symbols at the same time or generates multiple predefined symbols, wherein each symbol is associated with one respective port,
**characterized in that**
the illumination means (102) projects light for identifying the positions of the respective ports into the periphery of the device (105), in particular onto a surface of a support which is holding the device (105).

7. Method according to claim 6,
**characterized in that**
at least one illumination parameter varies, in particular 1 fades, in dependency of a distance of the human body part (104) to the respective port.

8. Method according to claim 7,
**characterized in that**
the illumination parameter defines the color of the projected light and/or the brightness of the projected light and/or the direction of the projected light.

## Patentansprüche

1. Vorrichtung (105), insbesondere ein Laptop,
mindestens umfassend
ein Gehäuse,
eine Bildschirmeinheit (110) zur Ausgabe visueller Informationen und/oder eine Tastatur (111),
mindestens einen Anschluss zur mechanischen Kopplung mit einer externen Vorrichtung zur Ein- und/oder Ausgabe von Daten und/oder Signalen und/oder Energie,
mindestens ein Erfassungsmittel (100) zum Erfassen des Vorhandenseins eines menschlichen Körperteils (104) in einem definierten Bereich vor dem mindestens einen Anschluss,
wobei das Erfassungsmittel (100) und der mindestens eine Anschluss an das Gehäuse gekoppelt sind,
Beleuchtungsmittel (102), die in Abhängigkeit von der Erfassung des Vorhandenseins des menschlichen Körperteils betätigt werden,
**dadurch gekennzeichnet, dass**
das Beleuchtungsmittel (102) Licht zur Identifizierung der Position des jeweiligen Anschlusses in die Peripherie der Vorrichtung (105) projiziert.

2. Vorrichtung nach Anspruch 1,
**dadurch gekennzeichnet, dass**
das Gehäuse zumindest über mehreren Anschlüssen einen transparenten Abschnitt aufweist, wobei der transparente Abschnitt eine Form des Symbols bildet, das den jeweiligen Anschluss identifiziert.

3. Vorrichtung nach einem der vorstehenden Ansprüche,
**dadurch gekennzeichnet, dass**
ein Beleuchtungsparameter, insbesondere Lichtfarbe und/oder Helligkeit, variiert in Abhängigkeit von einem Abstand des menschlichen Körperteils zum jeweiligen Anschluss.

4. Vorrichtung nach einem der vorstehenden Ansprüche,
**dadurch gekennzeichnet, dass**
der mindestens eine Anschluss eine Öffnung ausbildet, wobei sich die Öffnung in einer Ebene erstreckt, die unter einem Winkel α zur Betätigungsschnittstelle, insbesondere zu Tasten, der Tastatur und/oder zur Bildschirmhauptfläche, insbesondere zum Bildschirmausschnitt, geneigt ist.

5. Vorrichtung nach Anspruch 4,
**dadurch gekennzeichnet, dass**
Winkel α ist ein Winkel zwischen 45° und 135°, insbesondere 90°.

6. Verfahren zum Identifizieren der Positionen von mechanischen Anschlüssen einer Vorrichtung (105) mit einer Tastatur (111) und/oder einer Bildschirmeinheit (110), wobei die mechanischen Anschlüsse Anschlüsse zum Eingeben von Daten und/oder Signalen und/oder Energie und/oder zum Ausgeben von Daten und/oder Signalen und/oder Energie sind,
zumindest umfassend die Schritte:
Detektion eines menschlichen Körperteils (104), insbesondere einer Hand, in einem vordefinierten Bereich vor den Anschlüssen mit einem Erfassungsmittel (100),
wobei das Erfassungsmittel (100) Teil der Vorrichtung (105) ist,
Auslösen eines Beleuchtungsmittel (102) zur visuellen Anzeige der Positionen der Anschlüsse und vorzugsweise zur Identifizierung der Anschlüsse,
wobei das Beleuchtungsmittel (102) in Abhängigkeit von der Erfassung des Vorhandenseins des menschlichen Körperteils (104) betätigt wird, wobei das Beleuchtungsmittel (102) mehrere vordefinierte Symbole gleichzeitig beleuchtet oder mehrere vordefinierte Symbole erzeugt, wobei jedes Symbol jeweils einem Anschluss zugeordnet ist,
**dadurch gekennzeichnet, dass**
das Beleuchtungsmittel (102) Licht zur Identifizierung der Positionen der jeweiligen Anschlüsse in die Peripherie der Vorrichtung (105) projiziert, insbesondere auf eine Oberfläche eines Trägers, der die Vorrichtung (105) hält.

7. Verfahren nach Anspruch 6,
**dadurch gekennzeichnet, dass**
mindestens ein Beleuchtungsparameter variiert, insbesondere verblasst, in Abhängigkeit von einem Abstand des menschlichen Körperteils (104) zum jeweiligen Anschluss.

8. Verfahren nach Anspruch 7,
**dadurch gekennzeichnet, dass**
der Beleuchtungsparameter definiert die Farbe des projizierten Lichts und/oder die Helligkeit des projizierten Lichts und/oder die Richtung des projizierten Lichts.

## Revendications

1. Dispositif (105), en particulier un ordinateur portable,
comprenant au moins
un logement,
une unité d'affichage (110) pour l'affichage d'informations visuelles et/ou un clavier (111),
au moins une connexion pour le couplage mécanique avec un dispositif externe pour l'entrée et/ou la sortie de données et/ou de signaux et/ou d'énergie,
au moins un moyen de détection (100) pour détecter la présence d'une partie du corps humain (104) dans une zone définie devant ledit au moins un terminal,
dans lequel ledit moyen de détection (100) et ledit au moins un terminal sont couplés audit boîtier, Moyen d'éclairage (102) actionné en réponse à la détection de la présence d'une partie du corps humain,
**caractérisé en ce que**
le moyen d'éclairage (102) projette de la lumière pour identifier la position du connecteur respectif dans la périphérie du dispositif (105).

2. Le dispositif selon la revendication 1,
**caractérisé en ce que**
le boîtier comporte une partie transparente au moins sur une pluralité de terminaux, la partie transparente formant une forme du symbole identifiant le terminal respectif.

3. Dispositif conforme à l'une des revendications précédentes,
**caractérisé en ce que**
un paramètre d'éclairage, en particulier la couleur et/ou la luminosité de la lumière, varie en fonction de la distance entre la partie du corps humain et la connexion correspondante.

4. Dispositif conforme à l'une des revendications ci-dessus,
**caractérisé en ce que**
l'au moins une connexion forme une ouverture, l'ouverture s'étendant dans un plan incliné selon un angle α à l'interface d'actionnement, en particulier aux touches, au clavier et/ou à la surface principale de l'écran, en particulier à la découpe de l'écran.

5. Dispositif selon la revendication 4,
**caractérisé en ce que**
L'angle a est un angle compris entre 45° et 135°, surtout 90°.

6. Méthode pour identifier les positions des connexions mécaniques d'un dispositif (105) ayant un clavier (111) et/ou une unité d'affichage (110), dans laquelle les connexions mécaniques sont des connexions pour l'entrée de données et/ou de signaux et/ou de puissance et/ou pour la sortie de données et/ou de signaux et/ou de puissance,
au moins globalement les étapes :
la détection d'une partie du corps humain (104), en particulier une main, dans une zone prédéfinie devant les terminaux avec un moyen de détection (100),
où le moyen de détection (100) fait partie du dispositif (105),
Déclenchement d'un moyen d'éclairage (102) pour indiquer visuellement les positions des terminaux et, de préférence, pour identifier les terminaux,
dans lequel ledit moyen d'illumination (102) est actionné en réponse à la détection de la présence de ladite partie du corps humain (104), ledit moyen d'illumination (102) illuminant une pluralité de symboles prédéfinis simultanément ou générant une pluralité de symboles prédéfinis, chaque symbole étant associé à un terminal respectif,
**caractérisé en ce que**
le moyen d'éclairage (102) projette de la lumière pour identifier les positions des connecteurs respectifs dans la périphérie du dispositif (105), en particulier sur une surface d'un support maintenant le dispositif (105).

7. Méthode selon la revendication 6,
**caractérisé en ce que**
au moins un paramètre d'éclairage varie, en particulier s'atténue, en fonction de la distance entre la partie du corps humain (104) et la connexion respective.

8. Méthode selon la revendication 7,
**caractérisé en ce que**
le paramètre d'éclairage définit la couleur de la lumière projetée et/ou la luminosité de la lumière projetée et/ou la direction de la lumière projetée.
